# EUROPEAN PATENT APPLICATION

(11) **EP 2 015 417 A1**
(43) Date of publication of application: **14.01.2009**
(21) Application number: 08012419.1
(22) Date of filing: 09.07.2008
(51) Int. Cl.: H02G 3/04

(54) **A corrugated tube and mounting method therefor**

(30) Priority: 11.07.2007 JP 2007182369
(71) Applicant: Sumitomo Wiring Systems, Ltd., Yokkaichi-city, Mie Aichi 510-8503 (JP)
(72) Inventor: Shimizu, Masataka, Yokkaichi-City MIE 510-8503 (JP); Morii, Toshitsugu, Yokkaichi-City MIE 510-8503 (JP); Kobayashi, Koji, Yokkaichi-City MIE 510-8503 (JP); Doi, Masayuki, Yokkaichi-City MIE 510-8503 (JP); Okuoka, Yasunori, Yokkaichi-City MIE 510-8503 (JP)
(74) Representative: Müller-Boré & Partner Patentanwälte

(57) **Abstract**

An object of the present invention is to provide a corrugated tube capable of preventing a mounting member from getting caught in a circumferential direction even if having a locking structure.

One closing walls 14A of circumferentially extending annular projections 12 are formed along a slit 13, and lock projections 16 dimensioned to be fitted inside the annular projections 12 are provided between the one closing walls 14A and other closing walls 15A. The lock projections 16 are tapered toward the projecting ends thereof and clearances, into which the one closing walls 14A are insertable, are defined between the lock projections 16 and the other closing walls 15A. Out of the opposite ends 14, 15 of the annular projections 12, the ends corresponding to the one closing walls 14A are fitted on the lock projections 16 to engage the one closing walls 14A and the lock projections 16, thereby locking the slit 13 in a closed state.

## Description

### A Corrugated Tube And Mounting Method Therefor

The present invention relates to a corrugated tube provided with a locking structure and to a mounting method therefor.

A corrugated tube formed with a longitudinal slit has been conventionally known as the one to be mounted on a specified position of a wire group. This corrugated tube can be fitted sideways on the specified position of the wire group by opening the slit. However, in the case of such a corrugated tube, the slit is opened when the wire group is bent, wherefore taping or the like needs to be applied.

Accordingly, there is known a corrugated tube provided with a locking structure capable of locking the slit in a closed state to make such a taping operation unnecessary (for example, Japanese Unexamined Patent Publication No. H10-136531). This corrugated tube is constructed to lock the slit by forming mutually engageable locking recesses at the opposite ends of the annular projections (opposite ends facing at the opposite sides of the slit) and engaging these locking recesses.

However, in the case of using the corrugated tube while mounting a mounting member such as a protector thereon, the above construction has a problem that the mounting member easily gets caught by the locking recesses of the annular projections if an attempt is made to relatively rotate the mounting member in a circumferential direction of the corrugated tube.

The present invention was developed in view of the above situation and an object thereof is to preventing a mounting member from getting caught in a circumferential direction even if having a locking structure.

This object is solved according to the invention by the features of the independent claims. Preferred embodiments of the invention are subject of he dependent claims.

According to the invention, there is provided a corrugated tube, in which a plurality of circumferentially extending projections are arranged at specified (predetermined or predeterminable) intervals in a longitudinal direction and a slit is formed substantially in the longitudinal direction, wherein:
at least part of the opposite ends of each projection at the substantially opposite sides of the slit are respectively substantially closed by closing walls, one of the substantially opposite closing walls being formed substantially along the slit,
one or more lock projections dimensioned to be at least partly fittable inside the projections are at least partly provided between the one closing walls and the other closing walls,
clearances, into which the one closing walls are at least partly insertable, are defined between the lock projections and the other closing walls, and
when ends near the one closing walls out of the substantially opposite ends of the projections are at least partly fitted on or to the lock projections, the one closing walls and the lock projections are engaged to lock the slit in a closed state.

According to such a construction, the outer shape of the corrugated tube with the slit locked is approximate to that of a normal corrugated tube. Accordingly, even if having a locking structure, the corrugated tube can be prevented from getting caught by a mounting member in a circumferential direction.

According to a preferred embodiment of the invention, the one or more lock projections are tapered toward the projecting ends thereof. Since the lock projections are preferably tapered, the corrugated tube can be produced by a blow molding method similar to the normal corrugated tube.

According to a further preferred embodiment of the invention, there is provided a corrugated tube, in which a plurality of circumferentially extending annular projections are arranged at specified (predetermined or predeterminable) intervals in a longitudinal direction and a slit is formed in the longitudinal direction, wherein:
the opposite ends of each annular projection at the opposite sides of the slit are respectively closed by closing walls, one of the opposite closing walls being formed along the slit,
lock projections dimensioned to be fittable inside the annular projections are provided between the one closing walls and the other closing walls and tapered toward the projecting ends thereof,
clearances, into which the one closing walls are insertable, are defined between the lock projections and the other closing walls, and
when ends near the one closing walls out of the opposite ends of the annular projections are fitted on the lock projections, the one closing walls and the lock projections are engaged to lock the slit in a closed state.

According to such a construction, the outer shape of the corrugated tube with the slit locked is approximate to that of a normal corrugated tube. Accordingly, even if having a locking structure, the corrugated tube can be prevented from getting caught by a mounting member in a circumferential direction. Since the lock projections are tapered, the corrugated tube can be produced by a blow molding method similar to the normal corrugated tube.

Surfaces of the lock projections substantially facing the slit may serve as guiding surfaces inclined to gradually increase a projecting distance toward the other closing walls of the (preferably annular) projections. Thus, the one closing walls are guided by the guiding surfaces of the lock projections to pass the lock projections over only by closing the slit, wherefore the ends of the (annular) projections need not be lifted up and a locking operation can be easily performed.

One or more ribs may be at least partly formed between the lock projections and the other closing walls. This increases the rigidity of parts between the other closing walls and the lock projections to prevent the lock projections from being inclined. Therefore, the slit can be held locked with an increased force.

The ribs may be provided at positions substantially corresponding to the widthwise centers of the lock projections.

The lock projections may be provided in a one-to-one correspondence with all the (preferably annular) projections. Since the slit is locked at the positions of all the (annular) projections in this way, the slit can be reliably held closed.

The ribs may be provided in a one-to-one correspondence with all the lock projections. Since the inclination of all the lock projections can be prevented in this way, the slit can be held closed with even a larger force.

The lock projections may have a substantially trapezoidal shape when viewed in directions along the circumferential and longitudinal directions of the corrugated tube.

The corrugated tube may be produced by a blow molding method or a vacuum molding method.

According to the invention, there is further provided a method for mounting a corrugated tube, in particular according to the invention or a preferred embodiment thereof, having a plurality of circumferentially extending projections being arranged at specified (predetermined or predeterminable) intervals in a longitudinal direction on or to an element, comprising the following steps:
opening a slit being formed substantially in the longitudinal direction of a corrugated tube and fitting the corrugated tube sideways or substantially radially on or to the element;
closing the slit, wherein at least part of the opposite ends of each projection at the substantially opposite sides of the slit are respectively substantially closed by closing walls, one of the substantially opposite closing walls being formed substantially along the slit,
at least partly fitting one or more lock projections inside the projections, the one or more lock projections being at least partly provided between the one closing walls and the other closing walls, and
when ends near the one closing walls out of the substantially opposite ends of the projections are at least partly fitted on or to the lock projections, the one closing walls and the lock projections are engaged to lock the slit in a closed state.

According to a preferred embodiment of the invention, the method further comprises a step of guiding the one closing walls by means of surfaces of the lock projections substantially facing the slit inclined to gradually increase a projecting distance toward the other closing walls of the projections in order to move the one closing walls onto the respective lock projections.

Preferably, a rigidity of parts between the lock projections and the other closing walls is increased by one or more ribs 18 being provided at least partly formed therebetween.

Further preferably, the ribs are provided at positions substantially corresponding to the widthwise centers of the lock projections.

Still further preferably, the ribs are provided in a one-to-one correspondence with all the lock projections.

Most preferably, the lock projections are provided in a one-to-one correspondence with all the projections.

Accordingly, there can be provided a corrugated tube capable of preventing a mounting member from getting caught in a circumferential direction even if having a locking structure.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view partly in section showing a corrugated tube of one embodiment,
FIG. 2 is a section along A-A of FIG. 1,
FIG. 3 is a section along B-B of FIG. 1,
FIG. 4 is a section showing a state before a slit is locked in a closed state,
FIG. 5 is a side view showing a state where the slit is locked in the closed state, and
FIG. 6 is a section showing the state where the slit is locked in the closed state.

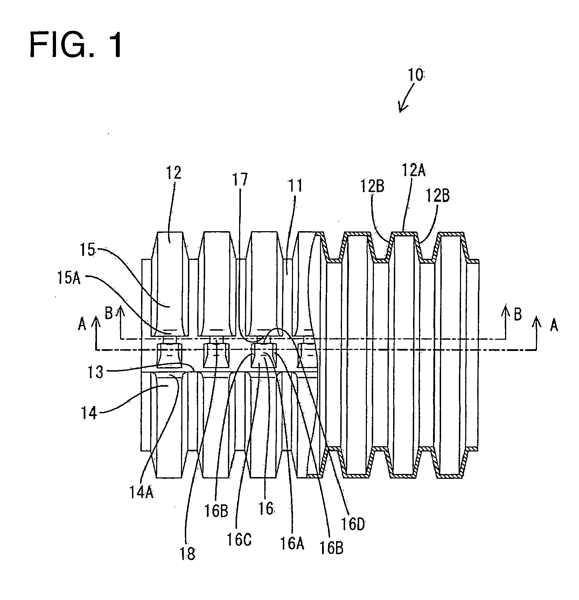

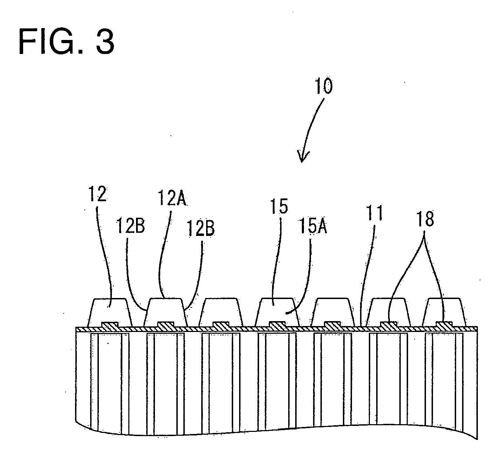

Hereinafter, one preferred embodiment of the present invention is described with reference to FIGS. 1 to 6.

A corrugated tube 10 in this embodiment is to be mounted on a specified (predetermined or predeterminable) position of or on an unillustrated wire group to protect the wire group by at least partly surrounding it. The corrugated tube 10 is made e.g. of synthetic resin, has a bellows or wave-like shape in which a plurality of substantially annular projections 12 project at specified (predetermined or predeterminable) intervals from a (preferably substantially cylindrical) inner wall 11, and has such flexibility as to be preferably able to flexibly follow a layout path of the wire group. This corrugated tube 10 is formed with a (preferably substantially straight) slit 13 over the entire length in its longitudinal direction.

The annular projections 12 circumferentially extend from positions in contact with the slit 13 to positions before the slit 13, and the opposite circumferential ends thereof are arranged to substantially face at the opposite sides of the slit 13. Hereinafter, the ends of the annular projections 12 in contact with or adjacent to the slits 13 are referred to as first ends 14 and those distanced from the slit 13 are referred to as second ends 15.

Each annular projection 12 is shaped to narrow the width (width in an arranging direction of the annular projections 12) toward a projecting end surface 12A, and is formed by the projecting end surface 12A substantially parallel to the inner wall 11 of the corrugated tube 10 and opposite side surfaces 12B projecting from the substantially opposite lateral edges of this projecting end surface 12A toward the base end of the annular projection 12 (toward the inner wall 11) preferably in such oblique directions as to increase the spacing therebetween. When viewed in a direction along the circumferential direction of the corrugated tube 10, the respective annular projections 12 have a substantially trapezoidal cross section, which is equal in the circumferential direction.

The first end 14 and the second end 15 of each annular projection 12 are respectively closed by a first closing wall 14A (corresponding to a preferred one closing wall or a first closing wall) and a second closing wall 15A (other closing wall). The first and second closing walls 14A, 15A preferably have substantially trapezoidal shapes and close the ends of the annular projection 12 by having peripheral edges substantially continuous with the substantially opposite side surfaces 12B and the projecting end surface 12A of the annular projection 12 and the inner wall 11. The first closing walls 14A are formed substantially along or adjacent to the slit 13, i.e. the slit 13 preferably extends substantially straight in the longitudinal direction along the first closing walls 14A.

On the inner wall 11, one or more lock projections 16 are provided at one or more positions between the second closing walls 15A and the slit 13 (between the first and second closing walls 14A, 15A) and/or substantially continuous with the annular projections 12. One lock projection 16 preferably is provided for each annular projection 12 and formed at a position slightly distanced from the slit 13 toward the corresponding closing wall 15A (see FIG. 1).

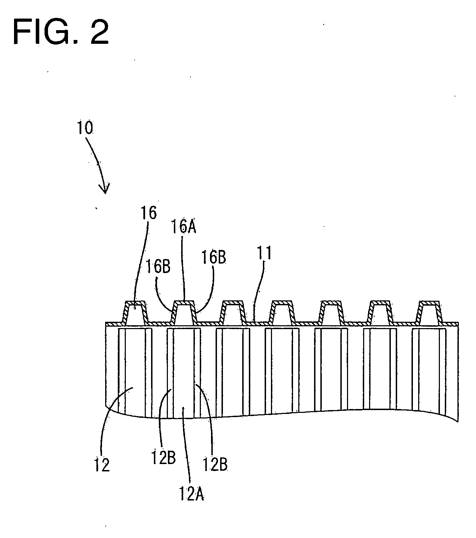

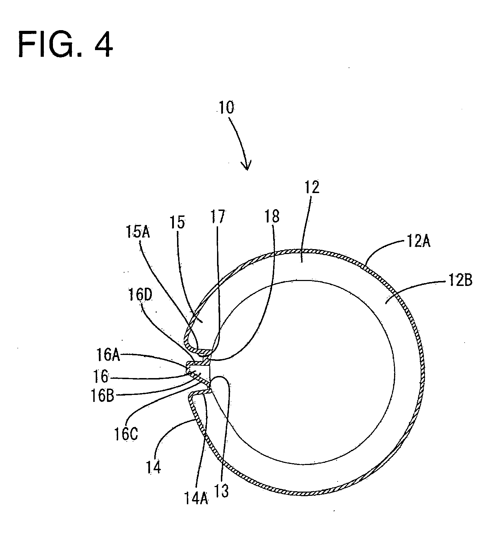

Each lock projection 16 preferably is tapered toward its projecting end as a whole, and a projecting end surface 16A thereof preferably is substantially parallel to the inner wall 11 and/or substantially opposite side surfaces 16B project from the substantially opposite lateral edges of the projecting end surface 16A to the base end (toward the inner wall 11) of the lock projection 16 in such oblique directions as to increase the spacing therebetween (see FIG. 2). As shown in FIG. 4, at least one portion of a surface of the lock projection 16 facing the slit 13 serves as a guiding surface 16C inclined to gradually increase a projecting distance toward the second closing wall 15A, and/or a surface of the lock projection 16 substantially facing the second closing wall 15A serves as a locking surface 16D at an angle different from 0° or 180°, preferably substantially perpendicular to the inner wall 11 of the corrugated tube 10. This locking surface 16D and the second closing wall 15A preferably are arranged to face substantially in parallel, and a clearance with a dimension substantially twice or more as large as the thickness of the first closing wall 14A is defined therebetween. A part between the locking surface 16D and the second closing wall 15A serves as an inserting portion 17, into which the first closing wall 14A is at least partly insertable.

Preferably all the respective lock projections 16 have a substantially trapezoidal shape when viewed in directions along the circumferential and longitudinal directions of the corrugated tube 10. The respective lock projections 16 are so dimensioned as to be closely fittable at least partly into the corresponding (preferably substantially annular) projections 12. More specifically, with the respective lock projections 16 at least partly fitted in the first ends 14 of the corresponding annular projections 12, the substantially opposite side surfaces 16B of the lock projections 16 have substantially the same inclinations as the opposite side surfaces 12B of the annular projections 12 and are arranged proximate to these side surfaces 12B.

On the inner wall 11 of the corrugated tube 10, one or more ribs 18 are formed between the locking surfaces 16D of the locking projections 16 and the second closing walls 15A. The ribs 18 preferably are provided in a one-to-one correspondence with all the locking projections 16. The respective ribs 18 preferably are arranged at positions substantially corresponding to the widthwise (width direction along the longitudinal direction of the corrugated tube 10) centers of the respective locking projections 16 and integrally or unitarily project from the inner wall 11 while at least partly spanning between the locking surfaces 16D and the second closing walls 15A. In this way, parts of the inner wall 11 between the locking projections 16 and the second closing walls 15A where the ribs 18 preferably are provided have a larger wall thickness in inward and outward directions by the thickness of the ribs 18 as compared with other parts.

Next, a method for mounting the corrugated tube 10 on an element such as the wire group is described.

First of all, the slit 13 of the corrugated tube 10 is opened and the corrugated tube 10 is fitted sideways or substantially radially on the wire group or any other element to be protected. As the slit 13 is closed next, the first closing walls 14A are respectively guided by the inclinations of the guiding surfaces 16C of the locking projections 16 to move onto the projecting end surfaces 16A. As the slit 13 is further closed, the first closing walls 14A pass the projecting end surfaces 16A of the locking projections 16 over to be at least partly inserted into the inserting portions 17. Since the inserting portions 17 preferably have a slightly larger dimension than the wall thickness of the first closing walls 14A, the first closing walls 14A are at least partly insertable in inclined postures into the inserting portions 17.

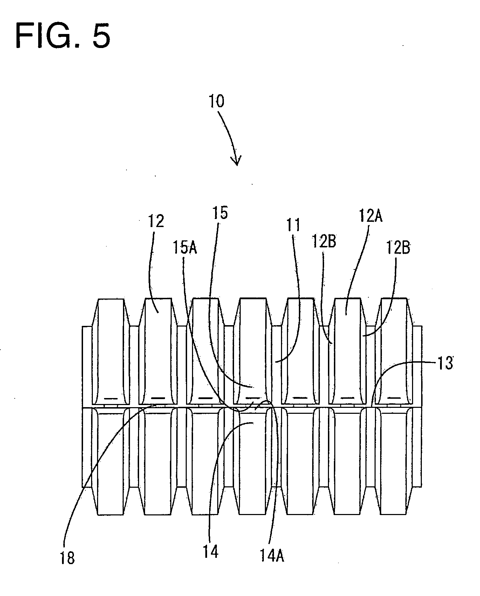

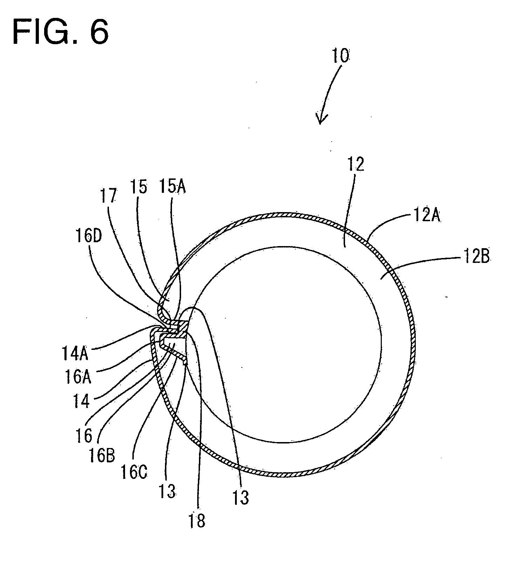

Then, the first closing walls 14A at least partly inserted into the inserting portions 17 and the locking surfaces 16D of the locking projections 16 are arranged to substantially face each other or to correspond to each other, whereby the slit 13 is locked in a closed state. At this time, the first ends 14 of the annular projections 12 are at least partly, preferably substantially completely fitted on the locking projections 16 and only tiny clearances preferably are left between the first closing walls 14A inserted into the inserting portions 17 and the second closing walls 15A, wherefore the annular projections 12 are preferably substantially continuous without any projections and recesses over the entire circumference. In other words, with the slit 13 locked in the closed state, the annular projections 12 (projecting end surfaces 12A and side surfaces 12B) of the corrugated tube 10 and the inner wall 11 respectively have smooth and/or (preferably substantially cylindrical) shapes free from projections and recesses over the substantially entire circumference, and the overall shape of the corrugated tube 10 is approximate to the outer shape of a normal corrugated tube (i.e. a slit-free corrugated tube or a corrugated tube having no locking structure even if being formed with a slit) (see FIGS. 5 and 6). Accordingly, when a mounting member such as a protector is mounted, the corrugated tube 10 preferably can be smoothly rotated to such an extent comparable with a normal corrugated tube without getting caught by the mounting member in the circumferential direction.

Since the lock projections 16 preferably are tapered toward their projecting ends, the corrugated tube 10 of this embodiment can be produced by a blow molding method similar to the conventional one.

Upon locking the slit 13 in the closed state, the first closed walls 14A are guided by the guiding surfaces 16C of the lock projections 16 to move over the lock projections 16. Thus, the first ends 14 need not be lifted up to be fitted on the lock projections 16, with the result that the locking operation can be easily performed.

Since the lock projections 16 preferably are provided for all the annular projections 12 and the slit 13 is locked at the positions of all the annular projections 12, the slit 13 can be reliably held closed preferably over the substantially entire length of the corrugated tube 10.

In addition, with the first ends 14 preferably at least partly fitted on or to the lock projections 16, the substantially opposite side surfaces 16B of the lock projections 16 are substantially in parallel with and/or proximate to the opposite side surfaces 12B of the annular projections 12. Thus, if the corrugated tube 10 is bent, the side surfaces 16B, 12B of the lock projections 16 and the annular projections 12 come into contact with each other to substantially prevent relative displacements of the respective lock projections 16 and first ends 14 in the longitudinal direction. Therefore, relative displacements of the opposite ends 14, 15 of the annular projections 12 in the longitudinal direction are restricted and/or the annular projections 12 are kept substantially continuous in the circumferential direction.

The rigidity of the parts between the lock projections 16 and the second closed walls 15 preferably is increased by the one or more ribs 18 provided therebetween, so that these parts are difficult to bend even upon the action of contact forces of the lock projections 16 and the first closed walls 14A. Specifically, by providing the one or more ribs 18, rigidity against bending deformation in such a direction as to displace the lock projections 16 inwardly of the corrugated tube 10 is increased to prevent the lock projections 16 from being inclined. Accordingly, even if relatively large forces act on the lock projections 16 upon bending the corrugated tube 10, the lock projections 16 and the first closed walls 14A are unlikely to be disengaged from each other and, hence, the slit 13 is kept in the closed state. Further, since the ribs 18 preferably are provided at the positions substantially corresponding to the widthwise centers of the lock projections 16, they resist bending deformations (deformations in directions to incline the lock projections 16) in a well-balanced manner. Since the ribs 18 are provided for all the lock projections 16, the inclination of all the lock projections 16 can be prevented, wherefore the slit 13 can be held closed with an increased force.

As described above, according to this embodiment, the outer shape of the corrugated tube 10 in the locked state of the slit 13 is approximate to the outer shape of a normal corrugated tube. Thus, the corrugated tube 10 can be prevented from getting caught by a mounting member in the circumferential direction even if having the locking structure.

Accordingly, to provide a corrugated tube capable of preventing a mounting member from getting caught in a circumferential direction even if having a locking structure, one or first closing walls 14A of circumferentially extending substantially annular projections 12 are formed along a slit 13, and one or more lock projections 16 dimensioned to be at least partly fitted inside the annular projections 12 are provided between the one closing walls 14A and other closing walls 15A. The lock projections 16 are tapered toward the projecting ends thereof and clearances, into which the one closing walls 14A are at least partly insertable, are defined between the lock projections 16 and the other or second closing walls 15A. Out of the opposite ends 14, 15 of the annular projections 12, the ends corresponding to the one or first closing walls 14A are at least partly fitted or inserted on the lock projections 16 to engage the one or first closing walls 14A and/or the lock projections 16, thereby locking the slit 13 in a closed state.

### <Other Embodiments>

The present invention is not limited to the above described and illustrated embodiment. For example, the following embodiments are also embraced by the technical scope of the present invention as defined by the claims.
(1) Although the present invention is applied to the corrugated tube 10 having the slit 13 formed over the entire length in the above embodiment, it is also applicable to a corrugated tube having a slit partly formed. Moreover, the corrugate tube may have a cross-sectional shape different from a substantially circular one such as a polygonal, squared, rectangular, elliptical or the like shape.
(2) Although the lock projections 16 are substantially trapezoidal when viewed in both the circumferential direction and the longitudinal direction in the above embodiment, the lock projections may have any shape provided that they are dimensioned to be at least partly fitted or inserted inside the annular projections and tapered toward the projecting ends. For example, the lock projections may have a triangular pyramidal shape. Moreover, the projections of the corrugated tube need not to be substantially annular, but may have different shapes such as a substantially spiral shape so that one end of one projection may substantially face (or be arranged opposite) to another end of another projection (e.g. the adjacent projection)
(3) Although the inserting portions 17 are dimensioned to be slightly larger than the wall thickness of the first closed walls 14A in the above embodiment, they may not necessarily be dimensioned to be larger.
(4) Although the surfaces of the lock projections 16 substantially facing the slits 13 are inclined guiding surfaces 16C in the above embodiment, these surfaces may not necessarily be inclined surfaces.
(5) Although the ribs 18 are formed between the lock projections 16 and the second closed walls 15A in the above embodiment, they may not be formed.
(6) Although the ribs 18 are provided at the positions substantially corresponding to the widthwise centers of the lock projections 16 in the above embodiment, they may be provided at positions displaced in width direction from the center positions.
(7) Although the lock projections 16 are provided for all the annular projections 12 in the above embodiment, the present invention is not limited thereto. For example, the lock projections may be provided for every other annular projection in an arranging direction of the annular projections or may be provided only in a longitudinal central part of the corrugated tube.
(8) Although the ribs 18 are provided for all the lock projections 16 in the above embodiment, the present invention is not limited thereto and one or more ribs may be provided only for selected arbitrary lock projections.
(9) Although the corrugated tube 10 is producible by the blow molding method in the above embodiment, it may be also be produced by any other method (e.g. vacuum molding method).

### LIST OF REFERENCE NUMERALS

- 10 ...: corrugated tube
- 12 ...: annular projection
- 13 ...: slit
- 14 ...: first end
- 14A ...: first closed wall (one closed wall)
- 15 ...: second end
- 15A ...: second closed wall (other closed wall)
- 16 ...: locking projection
- 16C ...: guiding surface
- 18 ...: rib

## Claims

1. A corrugated tube (10), in which a plurality of circumferentially extending projections (12) are arranged at specified intervals in a longitudinal direction and a slit (13) is formed substantially in the longitudinal direction, wherein:
at least part of the opposite ends of each projection (12) at the substantially opposite sides of the slit (13) are respectively substantially closed by closing walls (14A, 15A), one (14A) of the substantially opposite closing walls (14A, 15A) being formed substantially along the slit (13),
one or more lock projections (16) dimensioned to be at least partly fittable inside the projections (12) are at least partly provided between the one closing walls (14A) and the other closing walls (15A),
clearances, into which the one closing walls (14A) are at least partly insertable, are defined between the lock projections (16) and the other closing walls (15A), and
when ends near the one closing walls (14A) out of the substantially opposite ends of the projections (16) are at least partly fitted on or to the lock projections (16), the one closing walls (14A) and the lock projections (16) are engaged to lock the slit (13) in a closed state.

2. A corrugated tube (10) according to claim 1, wherein the one or more lock projections (16) are tapered toward the projecting ends thereof.

3. A corrugated tube (10) according to one or more of the preceding claims, wherein surfaces of the lock projections (16) substantially facing the slit (13) serve as guiding surfaces inclined to gradually increase a projecting distance toward the other closing walls (15A) of the projections (12).

4. A corrugated tube according to one or more of the preceding claims, wherein one or more ribs (18) are at least partly formed between the lock projections (16) and the other closing walls (15A).

5. A corrugated tube according to claim 4, wherein the ribs (18) are provided at positions substantially corresponding to the widthwise centers of the lock projections (16).

6. A corrugated tube according to claim 4 or 5, wherein the ribs (18) are provided in a one-to-one correspondence with all the lock projections (16).

7. A corrugated tube according to one or more of the preceding claims, wherein the lock projections (16) are provided in a one-to-one correspondence with all the projections (12).

8. A corrugated tube according to one or more of the preceding claims, wherein the lock projections (16) have a substantially trapezoidal shape when viewed in directions along the circumferential and longitudinal directions of the corrugated tube (10).

9. A corrugated tube according to one or more of the preceding claims, wherein the corrugated tube (10) is produced by a blow molding method or a vacuum molding method.

10. A method for mounting a corrugated tube (10) having a plurality of circumferentially extending projections (12) being arranged at specified intervals in a longitudinal direction on or to an element, comprising the following steps:
opening a slit (13) being formed substantially in the longitudinal direction of a corrugated tube (10) and fitting the corrugated tube (10) sideways or substantially radially on or to the element;
closing the slit (13), wherein at least part of the opposite ends of each projection (12) at the substantially opposite sides of the slit (13) are respectively substantially closed by closing walls (14A, 15A), one (14A) of the substantially opposite closing walls (14A, 15A) being formed substantially along the slit (13),
at least partly fitting one or more lock projections (16) inside the projections (12), the one or more lock projections (16) being at least partly provided between the one closing walls (14A) and the other closing walls (15A), and
when ends near the one closing walls (14A) out of the substantially opposite ends of the projections (16) are at least partly fitted on or to the lock projections (16), the one closing walls (14A) and the lock projections (16) are engaged to lock the slit (13) in a closed state.

11. A method according to claim 10, further comprising a step of guiding the one closing walls (14A) by means of surfaces of the lock projections (16) substantially facing the slit (13) inclined to gradually increase a projecting distance toward the other closing walls (15A) of the projections (12) in order to move the one closing walls (14A) onto the respective lock projections (16).

12. A method according to claim 10 or 11, wherein a rigidity of parts between the lock projections (16) and the other closing walls (15A) is increased by one or more ribs 18 being provided at least partly formed therebetween.

13. A method according to claim 12, wherein the ribs (18) are provided at positions substantially corresponding to the widthwise centers of the lock projections (16).

14. A method according to claim 12 or 13, wherein the ribs (18) are provided in a one-to-one correspondence with all the lock projections (16).

15. A method according to one or more of the preceding claims 10 to 14, wherein the lock projections (16) are provided in a one-to-one correspondence with all the projections (12).
